(19)

**Europäisches Patentamt**
**European Patent Office**
**Office européen des brevets**

(11) **EP 4 517 886 A1**

(12) **EUROPEAN PATENT APPLICATION**

(43) Date of publication:
**05.03.2025 Bulletin 2025/10**

(21) Application number: **23306433.6**

(22) Date of filing: **30.08.2023**

(51) International Patent Classification (IPC):
*H01M 4/86* (2006.01)     *B01J 21/18* (2006.01)
*B01J 23/42* (2006.01)     *B01J 23/44* (2006.01)
*B01J 23/46* (2006.01)     *B01J 23/74* (2006.01)
*B01J 23/89* (2006.01)     *C01B 32/318* (2017.01)
*C01B 32/336* (2017.01)     *H01M 4/88* (2006.01)
*H01M 4/92* (2006.01)     *H01M 4/90* (2006.01)
*H01M 8/10* (2016.01)

(52) Cooperative Patent Classification (CPC):
**H01M 4/926; B01J 21/18; B01J 23/42; B01J 23/44;**
**B01J 23/46; B01J 23/74; B01J 23/89; C01B 32/05;**
**C09C 1/50; C09C 1/54; C09C 1/56; C09C 1/565;**
**H01M 4/8605; H01M 4/8817; H01M 4/921;** (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Imertech**
**75015 Paris (FR)**

(72) Inventors:
• **RODLERT BACILIERI, Marlene**
  **6932 Breganzona (CH)**

• **ZUERCHER, Simone**
  **6945 Origlio (CH)**
• **GULAS, Michal**
  **6713 Malvaglia (CH)**
• **BUADES, Begoña**
  **6900 Masagno Ticino (CH)**
• **GILARDI, Raffaele**
  **6500 Bellinzona (CH)**

(74) Representative: **Eder, Michael**
**df-mp Dörries Frank-Molnia & Pohlman**
**Patentanwälte Rechtsanwälte PartG mbB**
**Theatinerstrasse 16**
**80333 München (DE)**

(54) **HIGH STRUCTURE, INTERMEDIATE SURFACE AREA CARBON BLACK WITH LOW MICROPOROSITY AND OPTIMIZED MESOPOROSITY**

(57)     The present invention relates to carbonaceous particulate materials with optimized Braun-Emmett-Teller specific surface areas (BET SSAs), pore size distribution, crystallinity, and aggregate structure possessing advantageous properties, such as, e.g., high corrosion resistance, and improved mass transport characteristics, which renders them particularly useful as support material for catalysts in fuel cells or electrolyzers.

Figure 1

(52) Cooperative Patent Classification (CPC): (Cont.)
C01P 2002/82; C01P 2006/12; C01P 2006/14;
C01P 2006/16; C01P 2006/19; C01P 2006/40;
C01P 2006/90; H01M 4/9041; H01M 4/9083;
H01M 2008/1095

**Description**

**FIELD OF THE DISCLOSURE**

The present invention relates to carbonaceous particulate materials with optimized Braun-Emmett-Teller specific surface areas (BET SSAs), pore size distribution, crystallinity, and aggregate structure possessing advantageous properties, such as, e.g., high corrosion resistance and improved mass transport characteristics, which renders them particularly useful as support material for catalyst(s) in applications in need of such, such as for example fuel cells or electrolyzers.

Also provided herein are catalyst compositions and catalyst layers that are useful, for example, as catalysts in electrochemical applications. Further, fuel cells and electrolyzers comprising the advantageous carbonaceous particulate materials according to the invention are provided. Finally, process for producing the advantageous carbonaceous particulate materials according to the invention are provided herein.

**BACKGROUND**

Fuel cells are an area of research that has gathered significant interest not only from the scientific community but also from the general public and the industry as a clean power generation system with little environmental impact. In a fuel cell, the chemical reaction energy between hydrogen gas ($H_2$) and oxygen gas ($O_2$), generally supplied in the form of air, is electrochemically converted into power. Thus, in principle, the only product generated during operation is water. The most common type of fuel cell for vehicle applications is the proton-exchange-membrane fuel cell (PEMFC)

A PEM fuel cell generally comprises an anode ("fuel electrode") and a cathode ("air electrode"), between which a gas diffusion layer (GDL) followed by microporous layer (MPL) and a catalyst layer is "sandwiched", separated by a central electrically insulating proton-exchange membrane, which often generally consists of Nafion-based material (a sulfonated tetrafluoroethylene based fluoro-copolymer). During fuel cell operation, a continuous flow of hydrogen fuel is streamed through the anode while a continuous flow of air passes the cathode. This results in the oxidation of hydrogen at the anode by the catalyst, releasing two electrons, and the reduction of the oxidant, air, at the cathode in the presence of hydrogen ions conducted through the Nafion membrane, subsequently forming $H_2O$ as the only reaction product. The electron release and subsequent oxidation process generally result in a voltage between the fuel and air electrode of up to about 1.2 V under ideal conditions.

Generally, the catalyst layers comprise a metal-based catalyst, such as transition group metals (like, for example, platinum, palladium, rhodium, ruthenium, iridium, and osmium). This metal-based catalyst may either be included in an unsupported form, such as a fine metal powder, or supported on an activating and electrically conducting support. Next to a support material, the catalyst often further comprises other components, such as proton-exchange polymers to enhance the ion-conducting properties of the catalyst layer. Furthermore, a catalyst layer is required to have a certain degree of porosity to allow the flow of reactant gases into the fuel cell and water out the electrode.

In addition to the nature of the active catalyst metal, the structure and composition of the catalyst support are of utmost importance to the activity of a fuel cell. One type of catalyst support which has gathered significant attention in various fields are carbonaceous particulate materials, such as carbon blacks. Carbon black generally refers to certain materials produced by the incomplete combustion of carbon-based materials and is characterized as para-crystalline carbon material. Suitable carbon blacks include oil furnace blacks, acetylene black, extra-conductive blacks, and graphitized versions thereof. Exemplary commercially available carbon blacks include Akzo Nobel Ketjen EC300J, Cabot Vulcan XC72R, and Denka Acetylene Black. A suitable carbonaceous particulate catalyst support material should display a high surface area on which the active material may be disposed to maximize the area of reactant/catalyst contact. At the same time, the catalyst material is required to be resistant to conditions present during fuel cell operation while also enabling the transport of protons across the material. At low catalyst loadings slow kinetics (mass transport resistance) becomes the dominant factor causing performance loss in PEM fuel cells.

The characteristics of carbon blacks, such as surface area, primary particle size, aggregate size, porosity, and surface polarity can be modified by various treatment steps to better fit the intended use. While graphitization steps generally serve to reduce surface area and improve carbon stability against corrosion, oxidative treatments can modify surface group chemistry, increase the porosity and surface area of the treated carbon black. Porous carbonaceous particulate materials have attracted attention for various academic and industrial applications.

In fuel cell applications, a porous carbonaceous particulate catalyst support material should be sufficiently stable under fuel cell operating conditions. Under load and during shut-down/start-up processes, corrosive conditions under high electrochemical potentials and temperature shifts can occur. While a high BET SSA for carbonaceous catalyst support material is generally correlated to good fuel cell performance, the high amount of surface area also leads to decreased corrosion resistance of the catalyst support material. Thus, a trade-off between electrochemical surface area and corrosion resistance of carbonaceous particulate catalyst support materials is often required.

For example, WO 2013/045894 describes electrically conducting microporous carbon support materials with good corrosion resistance. EP 3 552 261 demonstrates a porous carbon catalyst support with pores in the range of 2 nm to 5 nm and a high total pore volume, albeit not optimized for corrosion resistance. US 9 017 837 B2 discloses a method of making high surface area graphitized carbon with a c/2 of less than 0.3500 nm.

In light of the above, there is a need for corrosion resistant carbonaceous particulate catalyst support materials which also demonstrate good mass transport characteristics and enable high electrochemically active surface areas (ECSA) of deposited active catalyst materials. Ideally, such carbonaceous particulate materials should be electrically conducting, protect the active catalyst material from poisoning, and enable the flow of gasses and liquids through the catalyst support material. Such materials would allow the manufacture of catalyst compositions for fuel cells and electrolyzers, which are both highly active and able to withstand prolonged operation without a significant decrease in activity.

## SUMMARY OF THE INVENTION

The present inventors have surprisingly found that by carefully optimizing the physicochemical properties, in particular, the size distribution of pores within a carbonaceous particulate material, it was possible to provide excellent catalyst support materials characterized by an advantageous combination of morphology, pore and aggregate structure, electrical conductivity, and surface properties.

In particular, the optimized catalyst support materials have been demonstrated to be especially suitable for supporting catalysts for the hydrogen oxidation reaction, thus resulting in a fuel cell catalyst with a unique and advantageous combination of low corrosion under electrochemical conditions and high catalyst performance as determined by the electrochemical surface area (ECSA) of the catalyst material supported on the inventive carbonaceous particulate material, and improved mass transport of the catalyst material.

Accordingly, in the first aspect, the present invention relates to carbonaceous particulate materials, wherein the carbonaceous particulate materials are characterized by a BET SSA from about 300 $m^2/g$ to about 600 $m^2/g$, a micropore area of at most about 10 $m^2/g$, and a pore area of about 60 $m^2/g$ to about 240 $m^2/g$ in the 5-30 nm pore diameter range.

In the second aspect of the invention, the invention relates to catalyst compositions, comprising said carbonaceous particulate materials and at least one transition metal, or alloy, or mixture comprising the at least one transition metal.

Further, in the third aspect the present invention discloses catalyst layers comprising the carbonaceous particulate material according to the first and/or the catalyst compositions according to the second aspect of the invention as described above.

In the fourth aspect, the present invention also relates to fuel cells or electrolyzers, comprising the catalyst layer of the third aspect of the invention.

Finally, in the fifth aspect, the present invention provides a process for producing the carbonaceous particulate material according to the invention, comprising subjecting a high BET SSA carbonaceous particulate material with a BET SSA of between about 600 $m^2/g$ and about 1500 $m^2/g$ to an inert process gas at a temperature from about 900 °C to about 2200 °C, and at a pressure from atmospheric pressure to about 80 bar for about 10 minutes up to about 600 minutes.

This high BET SSA material (600 $m^2/g$ to about 1500 $m^2/g$) may optionally be synthesized in a prior step, comprising subjecting a low BET SSA carbonaceous particulate material with a BET SSA from about 5 $m^2/g$ to about 700 $m^2/g$ to an reactive process gas capable of oxidizing at least a portion of the carbon components on the outer surface at a temperature from about 900 °C to about 2200 °C and at a pressure from atmospheric pressure to about 80 bar for about 10 minutes up to about 600 minutes.

## BRIEF DESCRIPTION OF THE DRAWINGS

The present disclosure will be more readily appreciated by reference to the following detailed description when being considered in connection with the accompanying drawings:

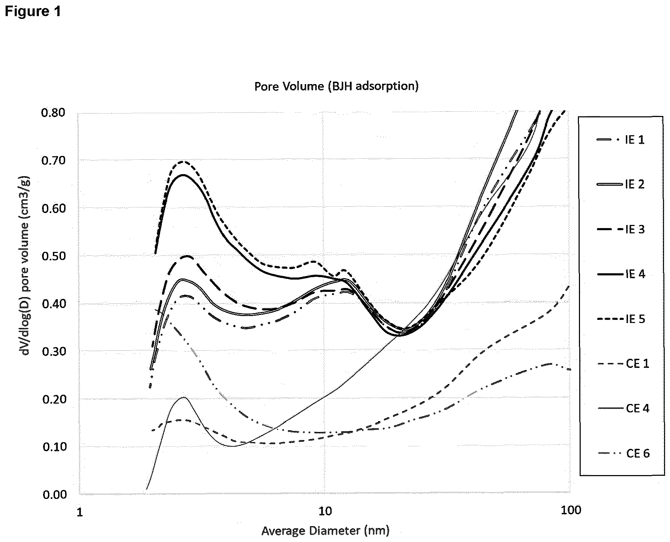

Figure 1 depicts the pore volume per in $cm^3$/gram of material in relation to the pore size distribution as average pore diameter for certain inventive (IE) and comparative examples (CE).

## DETAILED DESCRIPTION

The present inventors have surprisingly found that the optimization of the Braun-Emmett-Teller specific surface area (BET SSA) and pore size distribution leads to a carbonaceous particulate material with excellent catalyst support properties, making them particularly useful as catalyst support in electrochemical applications such as fuel cells, where high electrochemical surface area combined with good corrosion resistance and mass transport characteristics are desired. In particular, the present inventors have discovered that micropore area of carbonaceous particulate materials should be minimized for achieving the advantageous performance reported herein. The inventive combination of properties results in desirable properties of downstream catalyst products such as corrosion resistance and electrochemical surface area (ECSA). Such properties make the carbonaceous particulate materials according to the invention particularly advantageous for applications in Gas diffusion layers (GDL) for fuel cells.

It will be appreciated by those of skill in the art that carbonaceous particulate materials with low(er) surface areas (in particular BET SSA) are characterized by generally exhibiting a high(er) corrosion resistance, but also a low(er) distribution area for any transition metal catalysts, thus causing a loss in the potential electrochemical active surface area (ECSA). In contrast, carbon supports with high BET SSAs enable carbonaceous particulate materials with a good transition metal catalyst distribution, albeit by typically sacrificing some corrosion resistance of the catalyst support.

Hence, carbonaceous particulate materials of the present invention *inter alia* display an intermediate BET SSA, an increased portion of pores within the size range of 5-30 nm, and a decreased portion of pores within the size range of <2 nm (micropores). Additionally, downstream products for electrochemical applications comprising the carbonaceous material according to the invention such as gas diffusion layers (GDL) or gas diffusion electrodes (GDE), are characterized by good electrochemical surface areas (ECSA) and improved mass transport characteristics, while still maintaining good corrosion resistance during fuel cell operation.

## Carbonaceous Particulate Materials of the Present Disclosure and Downstream Products

As disclosed above, the present invention relates, in a first aspect, to carbonaceous particulate materials, wherein the carbonaceous particulate materials are characterized by a BET SSA of from about 300 $m^2$/g to about 600 $m^2$/g, a micropore area of at most about 10 $m^2$/g, and a pore area of about 60 $m^2$/g to about 240 $m^2$/g in the 5-30 nm pore diameter range.

As such, the carbonaceous particulate materials are, among other parameters, characterized by their respective Braun-Emmett-Teller specific surface area (BET SSA). A higher BET SSA of the CB particles generally correlates with an increase in surface energy and a higher area of interaction between the surfaces of the particles and contacting media such as gases, byproducts, or catalyst particles. Hence, a higher BET SSA is also associated with increased corrosion when subjected to hydrogen fuel cell operation conditions. Therefore, it is generally understood that the BET SSA of carbon black particles will have a profound influence on the performance of resulting fuel cells. Generally, the carbonaceous particulate material is characterized by an BET SSA from about 300 $m^2$/g to about 600 $m^2$/g, however, in some embodiments, the carbonaceous particulate material may also be characterized by a BET SSA of from about 300 $m^2$/g to about 500 $m^2$/g, optionally wherein the carbonaceous particulate material is characterized by a BET SSA of from about 310 $m^2$/g to about 480 $m^2$/g, or of from about 315 $m^2$/g to about 460 $m^2$/g.

The current inventors have discovered that for fuel cell applications catalyst support materials do not significantly benefit from a high surface area attributed to micropores, while this surface area still contributes to increased corrosion characteristics. Hence, the carbonaceous particulate material according to the invention is characterized by a micropore area of at most about 10 $m^2$/g. In other embodiments, the carbonaceous particulate material of this aspect of the invention may also be characterized by a micropore area of at most about 9 $m^2$/g, or at most about 8 $m^2$/g, or at most about 7 $m^2$/g, or at most about 6 $m^2$/g, or at most about 5 $m^2$/g. In some embodiments, the carbonaceous particulate material comprises virtually no, or only a comparatively small number of pores with a diameter <2 nm, as determined by common methods generally known to the skilled person and including the measurement of the surface area attributed to pores with a diameter of less than 2 nm, which is also described in the Measurement Methods section below.

In contrast, the present inventors have discovered that catalyst support materials with an elevated number of pores in the 5 nm to 30 nm range result in improved catalyst materials while minimizing carbon corrosion during operation, thus enabling the production of improved fuel cells. Therefore, the carbonaceous particulate catalyst support material according to the invention is characterized by a pore area from about 60 $m^2$/g to about 240 $m^2$/g in the 5 nm - 30 nm pore diameter range. In certain embodiments, the carbonaceous particulate material may also be characterized by a pore area of from about 70 $m^2$/g to about 220 $m^2$/g, or from about 80 $m^2$/g to about 200 $m^2$/g, or from about 90 $m^2$/g to about 180 $m^2$/g in the 5-30 nm pore diameter range. The inventors have found that carbonaceous particulate materials with high pore area in this particular pore diameter range are especially suitable for the intended purposes. In other embodiments, the carbonaceous particulate material displays a pore area of at least about 70 $m^2$/g in the 5-30 nm pore diameter range. Optionally, the carbonaceous particulate material in these embodiments may also displays a pore area of at least about 80 $m^2$/g, or at least about 90 $m^2$/g, or at least about 100 $m^2$/g.

In a particular embodiment, the carbonaceous particulate material is characterized by a BET SSA from about 300 $m^2$/g to about 500 $m^2$/g, a micropore area of at most about 3% of the BET SSA, and a pore area from about 20% to about 40 % of the BET SSA in the 5-30 nm pore diameter range.

In certain embodiments, the carbonaceous particulate material as described herein may further be characterized by a micropore area which is at most about 3% of the BET SSA. Optionally, the micropore area is in some embodiments at most about 2.5%, at most about 2%, at most about 1.8%, or at most about 1.5% of the BET SSA.

Alternatively or additionally, in some embodiments, the carbonaceous particulate material of the present invention is characterized by a pore area in the 5-30 nm pore diameter range from about 20% to about 40% of the BET SSA. Optionally, the pore area in the 5-30 nm pore diameter range is in some instances from about 25% to about 40%, or from about 20% to about 35%, or from about 25% to about 35% of the BET SSA.

Carbonaceous particulate materials with a significant portion of pore surface area in pores in the diameter range of less than about 2 nm are generally not considered to be optimal for achieving the desired properties. Without wishing to be bound by theory, micropores in the diameter range of less than about 2 nm generally do not adequately protect the catalyst material.

Carbonaceous particulate materials with a significant portion of pore area in pores in the diameter range from 5 nm to 30 nm are preferred, not the least since, without wishing to be bound by theory, such pores are generally suitable to fit catalyst particles while still allowing for catalytic activity. The inventors have also surprisingly found that pores within the carbonaceous particulate material should preferably not be arbitrarily large, but rather should ideally be in the narrow specific mesopore size range with a diameter of 5 nm to 30 nm, as such carbonaceous particulate materials offer the optimum effective surface area to the catalyst and allow for smooth mass transport. Such materials also offer the possibility to protect the catalyst from poisoning by the ionomer.

Carbon blacks are composed of small, interconnected primary particle aggregates, and in the context herein, "interaggregate pore size" pertains to the measurement of the void spaces present between the primary aggregates formed by these particles. In certain embodiments, the carbonaceous particulate material may be further characterized by an intra-aggregate pore size from about 28 nm to about 46 nm, or from about 30 nm to about 44 nm.

"Total free surface energy" refers to the sum of all the energies associated with the exposed surfaces of the carbonaceous particulate materials, and allows the skilled person to make predictions, for example, on the materials wetting behavior, or interactions with its surrounding media, such as gas and/or liquids. Alternatively or additionally, the total surface free energy of the carbonaceous particulate material may in some embodiments range from about 15 mN/m to about 35 mN/m. Optionally, the total surface free energy may in some instances range from about 16 mN/m to about 34 mN/m, or from about 17 mN/m to about 33 mN/m, or from about 18 mN/m to about 32 mN/m.

The carbonaceous particulate material of the present invention may preferably be characterized by a high electrical conductivity, which is inversely proportional to the resistance of a material determined as the specific resistivity in $\Omega*cm$ at a density of the carbonaceous particulate material of 0.6 g/cm$^3$. In certain embodiments, the carbonaceous particulate material may be further characterized by a specific resistivity of at most about 0.1 $\Omega*cm$, optionally at most about 0.08 $\Omega*cm$, or at most about 0.07 $\Omega*cm$ at a density of 0.6 g/cm$^3$.

As mentioned above, one advantage of the current invention is that it provides carbonaceous particulate materials with good corrosion resistance while having least an medium BET SSA. The carbonaceous particulate material may in some embodiments be further characterized by a carbon loss of less than about 2 wt%, based on the total weight of the carbonaceous particulate material, after being exposed for 2 hours to corrosive conditions (as described below in the measurement methods section). Optionally, the carbon loss is in some embodiments less than about 1.9 wt%, or less than about 1.85 wt%, based on the total weight of the carbonaceous particulate material, after being exposed for 2 hours to said corrosive conditions.

When referring to carbon black materials, the Raman $I_G/I_D$ ratio is correlated to a materials degree of graphitization, understood as the relative amount of sp$^2$ hybridized carbon within the amorphous carbon particles. In some embodiments, the Raman $I_G/I_D$ ratio for the carbonaceous particulate material may be at least about 0.80, or at least about 0.90, or at least about 1.00. In other embodiments, the Raman $I_G/I_D$ value for the carbonaceous particulate material is from about 0.80 to about 1.40, or from about 0.90 to about 1.30, or from about 1.00 to about 1.20.

Alternatively or in addition, the carbonaceous particulate material particulate material may in certain embodiments be characterized by a crystallographic c/2 value from about 0.350 nm to about 0.375 nm (as measured by XRD). Hereby, the c/2 value describes the average distance between graphite sheets found within some mainly sp$^2$-hybridized regions, which may be comprised within the carbonaceous particulate material. Optionally, the carbonaceous particulate material particulate material may in other embodiments be characterized by a c/2 value from about 0.355 nm to about 0.370 nm, or by a c/2 value from about 0.356 nm to about 0.365 nm.

The carbonaceous particulate materials according to the invention display an optimized aggregate structure, which is indicated by a high Oil Absorption Number (OAN). The specified OAN provides valuable information about the materials' aggregate structure, porosity, surface area, and adsorption properties. A carbon black catalyst support material with an optimized aggregate structures allows for liquids, such as water, and gasses to flow through the carbonaceous particulate material and allow for good mass transport properties. The water-management properties of the carbonaceous particulate materials according to the invention are especially advantageous in fuel cell applications, where it has a major impact on the fuel cell efficiency and long-term durability, as both flooding and dehydration of fuel cells have to be avoided. Furthermore, this optimized aggregate structure of the carbonaceous particulate materials according to the invention also offers a high electron conductivity and transport through an electrode in the electrochemical application.

Accordingly, in some embodiment the carbonaceous particulate material is further characterized by having an Oil Absorption Number (OAN) from about 20 mL/100 g to about 400 mL/100 g. In other embodiments, the carbonaceous particulate material has an OAN from about 220 mL/100 g to about 380 mL/100 g, or from about 240 mL/100 g to about 340 mL/100 g, or from about 260 mL/100 g to about 320 mL/100 g, or from about 280 mL/100 g to about 300 mL/100 g.

In other embodiments, the carbonaceous particulate material is further characterized by an overall pore volume from about 0.4 $cm^3/g$ to about 1.6 $cm^3/g$. The carbonaceous particulate material may optionally be characterized by an overall pore volume from about 0.5 $cm^3/g$ to about 1.5 $cm^3/g$, or from about 0.6 $cm^3/g$ to about 1.4 $cm^3/g$, from about 0.7 $cm^3/g$ to about 1.3 $cm^3/g$.

In a particular embodiment, the carbonaceous particulate materials are characterized by a BET SSA from about 300 $m^2/g$ to about 600 $m^2/g$, a micropore area of at most about 10 $m^2/g$, a pore area of about 60 $m^2/g$ to about 240 $m^2/g$ in the 5-30 nm pore diameter range, and a total pore volume from about 0.7 $cm^3/g$ to about 1.3 $cm^3/g$.

The carbonaceous particulate material may, in some embodiments, be further characterized by a xylene density from about 1.2 $cm^3/g$ to about 1.9 $g/cm^3$, optionally wherein the carbonaceous particulate materials are characterized by a xylene density from about 1.25 $cm^3/g$ to about 1.90 $g/cm^3$, or from about 1.3 $cm^3/g$ to about 1.90 $g/cm^3$, or from about 1.35 $cm^3/g$ to about 1.90 $g/cm^3$.

Alternatively or in addition, the carbonaceous particulate material may be characterized by good mass transport properties in the sense of ion conductivity across the electrode. As will be understood by the person skilled in the art, a high oil absorption number (OAN) will be indicative of good mass transport properties.

In some embodiments, the carbonaceous particulate material may be a carbon black. Suitable carbon blacks preferably include, but are not limited to, carbon blacks selected from the group consisting of thermal black, acetylene black, furnace black, Ketjen black, and mixtures thereof.

## Catalyst compositions comprising the Carbonaceous Particulate Material of the Present Invention

In another aspect, the present invention relates to catalyst compositions comprising the carbonaceous particulate materials according to the invention and at least one transition metal, or alloy, or mixture comprising the at least one transition metal.

In some embodiments of the current invention, the at least one transition metal, or alloy, or mixture comprising the at least one transition metal is present in the form of particles. The particles are optionally deposited on the surface of the carbonaceous particles according to the invention. In some instances, the transition metal particles (or transition metal-containing alloy or mixture particles) deposited on the surface of the carbonaceous particulate materials may preferably be nanoparticles.

In certain embodiments, the catalyst composition is further characterized by an electrochemical surface area (ECSA) of at least about 70 $m^2/g$. In some embodiments, the carbonaceous particulate material has an ECSA of at least about 75 $m^2/g$, or of at least about 80 $m^2/g$.

Moreover, it has been discovered that in some embodiments the catalyst composition according to the invention has an ECSA of at least about 70 m2/g while at the same time being characterized by a carbon loss of less than about 2 wt%, based on the total weight of the carbonaceous particulate material, after being exposed to said corrosive conditions for 2 hours. In some embodiments, the at least one transition metal, or the alloy, or the mixture comprising the at least one transition metal comprised by the catalyst composition is selected from the group comprising iridium, nickel, cobalt, iron, chromium, palladium, platinum, rhodium, ruthenium, or an alloy, or a mixtures thereof. In preferred embodiments, the at least one transition metal is platinum, or an alloy, or a mixture comprising platinum. In embodiments where the catalyst composition comprises transition metal nanoparticles consisting of platinum metal, the platinum nanoparticles may preferably be between about 1 nm and about 6 nm in diameter or between about 1 nm and about 5 nm, or between about 1 nm and about 4 nm in diameter.

In some embodiments, the at least one transition metal, or the alloy, or the mixture comprising the at least one transition metal is present in at most about 80 wt%, at most 70 wt%, at most 60 wt%, at most about 50 wt%, at most about 45 wt%, at most about 40 wt%, or at most about 35 wt% of the catalyst composition.

In certain embodiments of the invention, particularly wherein the at least one transition metal-containing catalyst composition is in particulate form, the transition metal particles are small enough to fit within the pores in the 5 nm to 30 nm pore diameter range and remain catalytically active and capable of being protected from any ionomer.

In some embodiments of this aspect of the invention wherein the at least one transition metal, or alloy, or mixture comprising the at least one transition metal is platinum and in particulate form, the platinum particle size diameter as determined by XRD is from about 1 nm to 10 nm. In some of these embodiments, the platinum particle size diameter as determined by XRD is from about 1 nm to about 8 nm, or from about 1 nm to about 6 nm, or from about 1 nm to about 5 nm, or from about 1 nm to about 4 nm. Alternatively or in addition, the platinum particle size diameter may in such embodiments optionally be from about 1 nm to about 10 nm as determined by TEM. In certain embodiments, the platinum particle size diameter as determined by TEM is from about 1 nm to about 8 nm, or from about 1 nm to about 6 nm, or from about 1 nm to about 5 nm, or from about 1 nm to about 4 nm.

**Catalyst layers comprising the catalyst compositions of the Present Invention**

In an additional aspect, the present invention relates to a catalyst layer, comprising the catalyst compositions comprising the carbonaceous particulate materials according to the invention.

In certain embodiments, the catalyst layer is in the form of a planar sheet with a thickness of up to about 20$\mu$m, suitable for inclusion in electrochemical applications, in particular electrochemical applications where a high surface area is desired such as, e.g., fuel cell applications.

In some embodiments of this aspect of the present invention, the catalyst layer is structured to enable a gas or gas mixture to pass through the catalyst layer at ambient pressure or elevated pressures.

Additionally or alternatively, the catalyst layer is structured to enable liquids to pass through the catalyst layer, either across a planar catalyst layer, or directly through the planar axis of a catalyst layer, optionally wherein the liquid is water.

In certain embodiments, the catalyst layer as described herein is stable, conductive, permeable, and catalytically active. Optionally, the catalyst layer is stable, conductive, permeable, and catalytically active under elevated temperature and/or pressure. In some instances, elevated temperatures for the catalyst layer may refer to temperatures up to about 80 °C. In other instances, elevated temperatures refer to temperatures up to about 90 °C, or about 100 °C, or about 110 °C, or up to about 120 °C, or up to about 130 °C. In some instances, elevated pressures for the catalyst layer may refer to pressures up to about 2.0 bar, optionally up to about 2.5 bar, or up to about 3.0 bar, or up to about 3.5 bar, or up to about 4.0 bar, or up to about 4.5 bar, or up to about 5.0 bar.

When the catalyst layer comprises Pt nanoparticles, the catalyst layer may typically comprise said Pt nanoparticles with a loading from about 100 $\mu$g(Pt)/cm$^2$ to about 1000 $\mu$g(Pt)/cm$^2$,

The catalyst layers according to the invention may, in some embodiments, further comprise an ionically conducting polymer, optionally wherein the ionically conducting polymer is able to conduct protons. In certain embodiments, the proton conducting polymer is comprised in the catalyst layer in particulate form.

**Fuel cells or Electrolyzers comprising the carbonaceous particulate materials according to the invention**

Another, related aspect of the present invention relates to uses of the catalyst layer according to the invention (which comprises the carbonaceous particulate materials as described herein) for preparing fuel cells or electrolyzers, and to the fuel cells or electrolyzers comprising the catalyst layer according to the invention.

In some embodiments, the fuel cells or electrolyzers made by using the catalyst layer described herein do not show significant signs of corrosion, as measured by a decline in catalytic activity, during prolonged exposure to oxygen and/or water vapor or liquid water. Hereby, significant signs of corrosion refer to a decline in catalytic activity of at least 20% or at least 30% or at least 40% and prolonged exposure refers to exposure to oxygen and/or water vapor or liquid water at room temperature and ambient pressure for at least about 20.000 h.

Additionally or alternatively, in some embodiments, the fuel cell or electrolyzer may further comprise an ionically conducting polymer. In certain embodiments, the ionically conducting polymer is in the form of a sheet or membrane. Further optionally, the conducting polymer membrane may be a proton-exchange membrane (PEM). In preferred embodiments of the present invention, the PEM membrane comprises Nation.

In some embodiments, the fuel cells or electrolyzers according to the invention may comprise catalysts other than transition metal-based catalysts, within a cathode or the anode.

**Process for producing the Carbonaceous Particulate Material of the Present Invention**

Another aspect of the present invention relates to a process for producing the inventive carbonaceous particulate material as described herein. The process comprises, in its most general form, subjecting a high BET SSA carbonaceous particulate material with a BET SSA from about 600 m$^2$/g to about 1500 m$^2$/g to an inert process gas a temperature from about 900 °C to about 2200 °C and a pressure from about ambient pressure to about 80 bar for about 10 minutes up to about 600 minutes.

In some embodiments, the high BET SSA carbonaceous particulate material has a BET SSA from about 650 m$^2$/g to about 1200 m$^2$/g, or from about 700 m$^2$/g to about 1000 m$^2$/g.

The inert process gas in the process for producing the carbonaceous particulate materials may, in some embodiments, be selected from group comprising $N_2$, Ar, or mixtures thereof. Gases or mixtures thereof consisting of $N_2$ and/or Ar have been found to be particularly suitable for the purposes of the invention.

In some embodiments, the temperature in the process of making the carbonaceous particulate materials may be from about 900 °C to about 1600 °C.

It will be readily apparent to one of skill in the art that the treatment time must of course be adjusted to be long enough for obtaining particles with the medium-range BET SSA and desired pore size distribution as described earlier herein with respect to the characteristics of the carbonaceous particulate materials according to the present invention.

Additionally or alternatively, the high BET SSA carbonaceous particulate starting material to be used in in the process for producing a carbonaceous particulate material according to the invention may be synthesized starting from a low BET SSA carbonaceous particulate material, optionally wherein the low BET SSA carbonaceous particulate material is a commercially available carbonaceous particulate material.

The process for producing the high BET SSA carbonaceous particulate starting material for use in the process for producing carbonaceous particulate according to the invention may comprise, in its most general form, subjecting a low BET SSA carbonaceous particulate material with a BET SSA from about 5 $m^2$/g to about 600 $m^2$/g to an reactive process gas capable of oxidizing at least a portion of the carbon components on the outer surface of the low BET SSA carbonaceous particulate material for about 10 minutes up to about 600 minutes under the following conditions;

(i) a temperature from about 900 °C to about 2200 °C; and
(ii) a pressure from about ambient pressure to about 80 bar.

In some embodiments of the process for producing a high BET SSA carbonaceous particulate material to be used in in the process for producing a carbonaceous particulate material according to the invention, the low BET SSA carbonaceous particulate material comprises an outer surface comprising carbon components and wherein the BET SSA of the high BET SSA carbonaceous particulate material is higher than the BET SSA of the low BET SSA carbonaceous particulate material

The high BET SSA carbonaceous particulate material of some embodiments is characterized by a BET SSA from about 700 $m^2$/g to about 1200 $m^2$/g and an OAN from about 300 mL/100 g to about 750 mL/100 g.

In certain embodiments of the process for producing a high BET SSA carbonaceous particulate material to be used in the process for producing a carbonaceous particulate material according to the invention the low BET SSA has a BET SSA from about 20 $m^2$/g to about 600 $m^2$/g. Optionally, the low BET SSA carbonaceous particulate material may have a BET SSA from about 60 $m^2$/g to about 450 $m^2$/g. In certain embodiments, the low BET SSA carbonaceous particulate material has a BET SSA from about 40 $m^2$/g to about 500 $m^2$/g and an OAN from about 120 mL/100 g to about 400 mL/100 g.

In some preferred embodiments of the process for producing a high BET SSA carbonaceous particulate material to be used in the process for producing a carbonaceous particulate material according to the invention, the reactive process gas is selected from the group comprising of $CO_2$, steam, and mixtures thereof. Reactive process gases or mixtures thereof comprise of $CO_2$ and/or steam have been found to be particularly suitable for the purposes of the invention.

It will be readily apparent to one of skill in the art that the treatment time of the process for producing a high BET SSA carbonaceous particulate material to be used in the process of making a carbonaceous particulate material according to the invention is dependent on the type of reactor and parameters of the starting material and process conditions such as pressure and temperature in the reactor. In general, the treatment time must be adjusted to be long enough for obtaining particles with the desired high BET SSA, rendering it suitable for the process for producing a carbonaceous particulate material according to the present invention.

In some embodiments, both the high BET SSA and the low BET SSA carbonaceous particulate starting material may be a carbon black. Optionally, the CB particles may be selected from thermal black, acetylene black, or furnace black, Ketjen black, or mixtures thereof, which are different types of amorphous carbon black, obtained by incomplete combustion or thermal decomposition of hydrocarbons. Optionally, the thermal black, acetylene black, or furnace blacks, Ketjen black, or mixtures thereof suitable for the invention may be carbon blacks obtained from commercial sources, or they may be synthesized from hydrocarbon starting materials.

A variety of furnace set ups may be used in the process of making the inventive carbonaceous particulate material according to the invention. In some embodiments, the furnace is a continuous furnace set-up, or a batch furnace set up. Additionally or alternatively, the furnace may comprise a fluidized bed set-up. In some embodiments, the furnace may be a rotary kiln furnace or a muffle box furnace.

The temperatures of the process itself may, in some embodiments, range from about 900 °C to about 2200 °C, or from about 1000°C to about 1900°C, or from about 1200 °C to about 1600 °C.

During the process the continuous or batch furnace, the material to be treated is subjected to inert gas such as nitrogen or argon gas, or mixtures thereof. Additionally, post-treatment temperatures may be held for about 10 up to about 600 minutes, or from about 30 minutes up to about 500 minutes, or from about 50 minutes up to about 400 minutes, at a pressure of between about atmospheric pressure to about 80 bar. In some embodiments, the cooling-down process proceeds via a controlled cooling period up to a certain (lower than the post-treatment) temperature, which is followed by a natural cooling period.

Having regard to the processes of the invention as described herein, another aspect of the present invention relates to carbonaceous particulate starting materials as described herein, wherein said carbonaceous particulate starting materials are obtainable by a process as described herein.

**Definitions**

The term "about", when used herein in the context of parameters or values mentioned herein, encompasses deviations of $\pm10\%$ of the given value unless stated otherwise.

It is to be noted that the term "a" or "an" entity refers to one or more of that entity; for example, "a carbonaceous particulate material," is understood to represent one or more carbonaceous particulate materials. As such, the terms "a" (or "an"), "one or more," and "at least one" can be used interchangeably herein.

Furthermore, "and/or" where used herein is to be taken as specific disclosure of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

It is understood that aspects are described herein with the language "comprising", otherwise analogous aspects described in terms of "consisting of" and/or "consisting essentially of" are also provided.

Units, prefixes, and symbols are denoted in their Système International d'Unités (SI) accepted form. Numeric ranges are inclusive of the numbers defining the range.

The percentage (%) values specified herein are by weight unless specified otherwise.

The headings provided herein are not limitations of the various aspects of the disclosure, which can be had by reference to the specification as a whole. Accordingly, the terms defined immediately below are more fully defined by reference to the specification in its entirety.

As used herein, the term "hydrogen ion" and "proton" are used interchangeably and both refer to a positively charged hydrogen atom, noted as $H^+$.

Unless otherwise specified, the term "nanoparticles" or "nano-particulate materials" refer to particles of any shape with dimensions in the $1 \times 10^{-9}$ m and $1 \times 10^{-7}$ m range.

The term "micropore area", when used herein in the context of describing the size of carbonaceous particulate material pores, refers to pores with a diameter of equal to or smaller than 2 nm.

Unless otherwise specified, the term "corrosive conditions" refers to a static potential of 1 V to 1.4 V at 80 °C in 1 M $H_2SO_4$ in an electrochemical corrosion cell (e.g., available from Gamry Instruments). Such conditions lead to steady corrosion of carbon-based materials and enable the measurement of corrosion resistance of carbonaceous particulate materials.

**Measurement Methods**

Suitable methods for determining the various properties and parameters used to define the graphite particulate materials and compositions / downstream products comprising them are set out in more detail below.

Specific BET Surface Area, Micropore Area [m²/g], pore area 5-30 nm and total pore volume from nitrogen gas adsorption

The method is based on the registration of the absorption isotherm of liquid nitrogen in the pressure range $p/p_0$ = 0.01-0.995, at 77 K, where $p_0$ is the saturation pressure. The nitrogen gas adsorption was performed on an ASAP2020 from Micromeritics. The sample was degassed in a vacuum for at least 8 hours at 573 K before analysis. Following the procedure proposed by Brunauer, Emmet, and Teller (Adsorption of Gases in Multi-molecular Layers, J. Am. Chem. Soc., 1938, 60, 309-319), the monolayer capacity can be determined. On the basis of the cross-sectional area of the nitrogen molecule, the monolayer capacity, and the weight of the sample, the specific surface can then be calculated. The microporosity was obtained with the t-plot (Harkins & Jura) according to the formula proposed by Harkins & Jura with a thickness t-value in the range 3.5-5 Angström.

$$t = \sqrt{\frac{13.99}{0.034 - log\ log\ (p/p_0)}}$$

The porosity in the 5-30 nm range and the total pore volume were obtained from the adsorption isotherm using the method of Barrett, Joyner, and Halenda (BJH) with the thickness curve based on Halsey equation and Faas correction.

References:

Ravikovitch, P., Vishnyakov, A., Russo, R., Neinark, A., Langmuir, 16, 2000, 2311-2320,
Jagiello, J., Thommes, M., Carbon, 42, 2004, 1227-1232,
Barrett, E.P., Joyner, L.G. and Halenda, P.P., Journal of the American Chemical Society, 1951, 73, 373-380,
Harkins, W.D., and Jura, G., J. Chem. Phys., 1943,11: 430.

Infra-aggregate pore size [nm] with mercury porosimetry

The Intra-aggregate pore size is measured with a mercury porosimeter 9600 AutoPore V from Micromeritics. A sample is inserted in the measurement chamber and gas is evacuated from the sample cell. Mercury is then transferred into the sample cell under vacuum and pressure is applied to force mercury into the sample. During measurement, applied pressure p and intruded volume of mercury, V, are registered. The Washburn equation is applied with a surface tension of 480 mN/m and contact angle of mercury of 130°. From the derivative of the cumulative mercury intrusion curve, the position of the peak (located in the range of 20-100 nm) is taken to correspond to the size of interparticle (Intra-aggregate) pores.

Platinum particle size [nm] by Transmission Electrode Microscopy (TEM)

The platinum particle size was determined by transmission electrode microscopy (TEM). A representative set of calibrated TEM-micrographs is analyzed by observation of individual particles following image analysis, manual or computerized.

Interlayer Spacing c/2 by X-Ray Diffraction (XRD) [nm]

XRD data were collected using a PANalytical X'Pert PRO diffractometer coupled with a PANalytical X'Celerator detector. The diffractometer has following characteristics shown in Table 1:

**Table 1: Instrument data and measurement parameters**

| Instrument | PANalytical X'Pert PRO |
|---|---|
| X-Ray detector | PANalytical X'Celerator |
| X-ray source | Cu-K$_\alpha$ |
| Generator parameters | 45 kV - 40 mA |
| Scan speed | 0.07°/s |
| Divergence slit | 1° |
| Sample spinning | 60 rpm |

The data were analyzed using the PANalytical X' Pert HighScore Plus software.
The angular position of the peak maximum of the [002] reflection profile was determined and, by applying the Bragg equation, the interlayer spacing c/2 was calculated (Klug and Alexander, x-ray diffraction Procedures, John Wiley & Sons Inc., New York, London (1967)).

Platinum particle size by X-Ray Diffraction (XRD) [nm]

The platinum particle size was determined by X-ray diffractometer. The platinum particle size can be derived by applying the Scherrer formula on selected peaks as it is inversely related to the FWHM (full width at half maximum) of an individual peak: the more narrow the peak, the larger the crystallite size.
Reference: M. Carmo et al., Journal of Power Sources, 2007, 173, 860-866.

Oil Absorption Number (OAN) fmL/100 g]

The OAN is measured following the ASTM D2414 (procedure A). Paraffin oil is added to a dried carbon black sample in the mixer chamber of the absorptiometer. As the sample absorbs the oil the viscosity increases. When the viscosity reaches a predetermined torque level (400 mNm) the volume of the added oil is read. The volume of oil per unit mass of carbon black is the OAN.

Reference: ASTM D2414-01

Xylene density [g/cm$^3$]

The analysis is based on the principle of liquid exclusion as defined in DIN 51 901. Approx. 2.5 g (accuracy 0.1 mg) of powder was weighed in a 25 ml pycnometer. Xylene was added under vacuum (15 Torr). After a few hours dwell time under normal pressure, the pycnometer was conditioned and weighed. The density represents the ratio of mass and volume. The mass is given by the weight of the sample and the volume is calculated from the difference in weight of the xylene filled pycnometer with and without sample powder.

Reference: DIN 51 901

Total SFE Surface Free Energy [mN/m]

The total surface free energy was obtained using the Washburn method with a force tensiometer (K100, Krüss). 1 g of carbon powder was filled in a glass tube and compacted (with a 1 kg preload) for 30 seconds and thereafter brought in contact with different test liquids. The liquid was drawn up as a result of capillary action. The first test was done with 50 mL of 99% pure n-hexane, second test was done with 50 mL of pure water (MilliQ grade) and the third test was done with 50 mL of 99% pure di-iodomethane ($CH_2I_2$). With the results from the three measurements, the Surface Free Energy (SFE) in mN/m was calculated with the advanced software installed with the tensiometer.

$I_G/I_D$ ratio ("R value") by Raman Spectroscopy

Raman analyses were performed using LabRAM-ARAMIS Micro-Raman Spectrometer from HORIBA Scientific with a 473 nm laser at room temperature.
The $I_G/I_D$ ratio ("R value") is based on the ratio of intensities of the so-called band D and band G. These peaks are measured at 1350 cm$^{-1}$ and 1580 cm$^{-1}$ respectively and are characteristic for carbon materials.

Specific Resistivity [$\Omega$*cm]

0.5 g of graphite particles were compressed inside an insulating die (a ring made of glass fiber reinforced polymer having an inner diameter of 11.3 mm and inserted into a larger ring made of steel for additional mechanical support) between two electrified pistons made of brass (diameter: 1.13 cm). The applied force was controlled during the experiment, while the relative position of the pistons in the die (i.e. the height of the powder sample) was measured using a length gauge. The voltage drop across the sample at known, constant current of 105 mA was measured *in situ* at different pressure from 0 kN/cm$^2$ up to 20 kN/cm$^2$ using the pistons as the electrodes (2-point resistance measurement).
The sample resistance was calculated using Ohm's law, assuming that the contact resistances between pistons and the sample can be neglected (the calculated resistance was ascribed entirely to the sample). The sample resistivity was calculated using the nominal inner diameter of the mold (1.13 cm) and the measured sample height, and expressed in $\Omega$*cm. During the experiment, the polymeric ring deformed elastically as a consequence of the lateral expansion (transverse strain) of the sample but can be neglected for comparative purposes. Specific Resistivity ($\Omega$*cm) at a density 0.6 g/cm$^3$ is taken as a point of comparison for the carbon samples.

*References:*

Probst, Carbon, 2002, 40, 201-205
Grivei, KGK, Kautschuk Gummi Kunststoffe, 2003, 56, Nr. 9
Spahr, Journal of Power Sources, 2011, 196, 3404-3413

**Method used for Benchmarking the Carbon Corrosion**

Carbon Corrosion [%]

Carbon corrosion was measured for carbon blacks deposited on a gas diffusion layer (GDL). The sample specimens are measured by preparing a dispersion of the carbon particles of interest and coat it on a carbon paper. The base dispersions containing the carbon black of interest, a wetting agent, a thicker and a pH regulator was mixed by ultraturax for 5 minutes. After the PTFE binder, together with a rheological additive and a tensioactive were added getting the final carbon dispersion. The dispersion was coated on the carbon paper, dried for 1 hour at 80 °C and thereafter post heated for 30 minutes at 380 °C. The resulting films comprising the carbonaceous particulate material were cut and then used as working electrodes. The carbon loading range from 0.2-5 mg/cm$^2$.

Measurement of carbon corrosion rate was carried out by chronoamperometry at 80 °C in 1 M $H_2SO_4$ in the electrochemical MultiPort™ corrosion cell from Gamry Instruments. The corrosion current was measured during a potentiostatic hold at 1 V to 1.4 V for times between 2 h to 24 h. Cyclic voltammetry was also measured at the start and end of the test. The wt% of carbon corroded after 2 h was calculated as described in the reference.

Reference: S.C. Ball et al., Journal of Power Sources, 2007, 171(1),18-25).

**Method used for Benchmarking the Gas Diffusion Electrode (GDE) and Oxygen Reduction Reaction (ORR) Activity**

Gas diffusion electrode (GDE) voltammetry and accelerated stress tests (AST)

A catalyst containing film-coated gas diffusion layer (GDL) disc was prepared according to Example 3. The 3 mm catalyst-containing disc was placed into an MPL-coated GDL disc which had a 3 mm hole in the middle. A Nafion membrane was placed on top. With a tablet press (pressure range: 0-15 t), the whole stack was pressed together at a pressure of two tonnes and a duration of 10 min. Afterwards, a gas diffusion layer was placed into the gas flow field of the lower cell body, followed by the stack containing the 3 mm catalyst disc and the Nafion membrane. Finally, the upper cell body was placed on top of the Nation membrane. The two body parts were held in place by a clamp. The compartments of the upper cell body were filled with 15 mL of 4 M perchloric or sulphuric acid. Finally, a reversible hydrogen electrode (RHE) as reference electrode (RE) and the counter electrode (CE, Pt wire) were put into the electrolyte.

All electrochemical measurements were performed at 30°C with a computer controlled potentiostat and a GDE-setup as reported in Example 4. The analytical procedure to electrochemically analyze the Pt/C catalyst layers was the same for all catalysts and included the following steps: First, the GDE was purged from the backside (through the GDL) with argon or nitrogen gas. Doing so, the catalyst was cleaned by potential cycles between 0.05 and 1.10 V vs reversible hydrogen electrode (RHE) at a scan rate of 0.2 V/s until a stable cyclic voltammetry (CV) could be observed (~50 cycles). Afterwards, a CO stripping measurement and oxygen reduction reaction (ORR)-activity measurements were performed. To conclude the investigations, a second CO stripping measurement was performed. Throughout the entire experiment, a bubbler was used to humidify the gas and the membrane. During the whole measurement, the solution resistance was measured by superimposing an AC signal of 5 kHz and an amplitude of 5 mV.

Electrochemical Surface Area (ECSA)

CO stripping measurements were conducted to determine the ECSA. In essence, the catalyst layer got covered by CO gas which adsorbed onto the Pt surface. Afterwards, the catalyst was purged with Ar to remove the excess of CO. As a next step, a CV was recorded (scan rate: 50 mV/s), which records the oxidative current originating from the oxidation of CO to $CO_2$. Finally, multiple CVs under Ar atmosphere were conducted until the Ar background was regained.

To determine the electrochemical active surface area (ECSA) of the investigated catalysts, the oxidation charge obtained from a CO monolayer stripping experiments was analyzed. In brief, the electrode was held at 0.05 V vs RHE in CO saturated electrolyte for 2 min. Subsequently, the electrolyte was saturated with Ar (~10 min) to purge the electrolyte from CO. The potential was swept from 0.05 V to 1.10 V vs RHE with a scan rate of 50 mV/s to oxidize the adsorbed CO monolayer to $CO_2$. The ECSA was then calculated from the ratio of resulting oxidative charge (QCO), after background subtraction, and the oxidation charge of a monolayer, 400 $\mu$C/cm$^2$(Pt), and finally normalized to the mass of the Pt (mPt).

$$ECSA = \frac{Q_{CO}}{400\mu Ccm_{Pt}^{-2}} \frac{1}{mPt}$$

Oxygen Reduction Reaction (ORR) Activity

The ORR data were analyzed from the background corrected polarization curves. The background polarization curves were recorded in Ar-purged electrolyte. The ORR activity was then evaluated at 0.90 V vs RHE from positive going scans. The mass activity (MA) was obtained by normalizing the activity by the Pt mass. The specific activity (SA) was obtained by normalizing the measured current density (mA/m$^2$) to the ECSA.

Prior to the ORR activity measurements, oxygen was flowed through the pipes for 10 min. For the last 5 min, a potential of 0.80 V vs RHE was applied. This ensured that all gas lines were fully filled with oxygen and that the catalyst layer was equally wet over the entire surface. The ORR activity measurements were conducted in potential control mode with a potential range between 1.00 V vs RHE and 0.10 V vs RHE. The potential was preset to 1.00 V vs RHE and then lowered in steps of 25 mV until 0.10 V vs RHE are reached. At every step, the potential was held constant for 1 min to reach steady-state conditions. For analysis, the measured current was averaged over the last 10 s.

Having described the various aspects of the present invention in general terms, it will be apparent to those of skill in the art that many modifications and slight variations are possible without departing from the spirit and scope of the present invention. The present invention is furthermore described by reference to the following, non-limiting numbered embodiments:

1. A carbonaceous particulate material, wherein the carbonaceous particulate material is characterized by

a) a BET SSA from about 300 m$^2$/g to about 600 m$^2$/g;

b) a micropore area of at most about 10 m$^2$/g; and

c) a pore area from about 60 m$^2$/g to about 240 m$^2$/g in the 5 nm - 30 nm pore diameter range.

2. The carbonaceous particulate material according to embodiment 1, wherein the carbonaceous particulate material is characterized by a BET SSA from about 300 m$^2$/g to about 500 m$^2$/g, optionally wherein the carbonaceous particulate material has a BET SSA from about 310 m$^2$/g to about 480 m$^2$/g, or from about 315 m$^2$/g to about 460 m$^2$/g.

3. The carbonaceous particulate material according to embodiment 1 or embodiment 2, wherein the carbonaceous particulate material has a micropore area of at most about 9 m$^2$/g, or at most about 8 m$^2$/g, or at most about 7 m$^2$/g, or at most about 6 m$^2$/g, or at most about 5 m$^2$/g.

4. The carbonaceous particulate material according to any one of embodiments 1-3, wherein the pore area in the 5-30 nm pore diameter range is from about 70 m$^2$/g to about 220 m$^2$/g or from about 80 m$^2$/g to about 200 m$^2$/g, or from about 90 m$^2$/g to about 180 m$^2$/g.

5. The carbonaceous particulate material according to any one of embodiments 1-4, wherein the micropore area represents at most about 3% of the BET SSA, optionally wherein the micropore area represents at most about 2.5%, at most about 2%, at most about 1.8%, or at most about 1.5% of the BET SSA.

6. The carbonaceous particulate material according to any one of embodiments 1-5, wherein the pore area in the 5-30 nm pore range represents from about 20% to about 40% of the BET SSA, optionally wherein the pore area in the 5-30 nm pore range represents from about 25% to about 40%, or from about 20% to about 35%, or from about 25% to about 35% of the BET SSA.

7. The carbonaceous particulate material according to any one of embodiments 1-6, wherein the carbonaceous particulate material is further characterized by a c/2 value from about 0.350 nm to about 0.375 nm as measured by XRD, optionally by a c/2 value from about 0.355 nm to about 0.370 nm, or by a c/2 value from about 0.356 nm to about 0.365 nm.

8. The carbonaceous particulate material according to any one of embodiments 1-7, wherein the carbonaceous particulate material is further characterized by an oil absorption number (OAN) from about 200 mL/100 g to about 400 mL/100 g, optionally wherein the particulate carbon has an OAN from about 240 mL/100 g to about 340 mL/100 g, or wherein the particulate carbon has an OAN from about 280 mL/100 g to about 300 mL/100 g.

9. The carbonaceous particulate material according to any one of embodiments 1-8, wherein the carbonaceous particulate material is further characterized by a Raman $I_G/I_D$ value of at least about 0.80, or at least about 0.90, or at least about 1.00; optionally wherein the Raman $I_G/I_D$ value is from about 0.80 to about 1.40, or from about 0.90 to about 1.30, or from about 1.00 to about 1.20.

10. The carbonaceous particulate material according to any one of embodiments 1-9, wherein the carbonaceous particulate material is further characterized by a carbon loss of less than 2 wt%, based on the total weight of the carbonaceous particulate material, after being exposed to corrosive conditions for 2 hours, optionally wherein the carbon loss is less than 1.9 wt% or less than 1.85 wt%, based on the total weight of the carbonaceous particulate material, after being exposed to corrosive conditions for 2 hours.

11. The carbonaceous particulate material according to any one of embodiments 1-10, wherein the carbonaceous particulate material is a carbon black, optionally wherein the carbon black is selected from thermal black, acetylene black, furnace black, and Ketjen black.

12. A catalyst composition, comprising the carbonaceous particulate material of any one of embodiments 1-11 and at least one transition metal, or alloy, or mixture comprising the at least one transition metal.

13. The catalyst composition of embodiment 12, wherein the at least one transition metal, or alloy, or mixture comprising the at least one transition metal is in a particulate form,
optionally wherein the at least one transition metal, or alloy, or mixture comprising the at least one transition metal is in form of a nanoparticle, deposited on the surface of the carbonaceous particulate material.

14. The catalyst composition according to embodiment 12 or embodiment 13, wherein the at least one transition metal, or alloy, or mixture comprising the at least one transition metal is iridium, nickel, cobalt, iron, chromium, palladium, platinum, rhodium, and/or ruthenium,
optionally wherein the at least one transition metal, or alloy, or mixture comprising the at least one transition metal is platinum.

15. The catalyst composition according to any one of embodiments 12-14, wherein the at least one transition metal, or alloy, or mixture comprising the at least one transition metal represents at most about 80 wt% of the catalyst composition, or at most about 70 wt%, or at most about 60 wt%, or at most about 50 wt%, at most about 45 wt%, at most about 40 wt%, or at most about 35 wt% of the catalyst composition.

16. The catalyst composition according to any one of embodiments 12-15, wherein the catalyst composition is further characterized by an electrochemical surface area (ECSA) of at least about 70 $m^2/g$, optionally wherein the carbonaceous particulate material has an ECSA of at least about 75 $m^2/g$, or of at least about 80 $m^2/g$.

17. A catalyst layer comprising the carbonaceous particulate material according to any one of embodiments 1-11, and/or the catalyst composition according to any one of embodiments 12-16.

18. A fuel cell or electrolyzer, comprising the carbonaceous particulate material according to any one of embodiments 1-11, the catalyst composition according to any one of embodiments 12-16, and/or the catalyst layer according to embodiment 17.

19. A process for producing a carbonaceous particulate material as defined in any one of embodiments 1-11, comprising subjecting a high BET SSA carbonaceous particulate material with a BET SSA of between about 600 $m^2/g$ and about 1500 $m^2/g$ to:

    a) an inert process gas;

    b) at a temperature from about 900 °C to about 2200 °C;

    c) at a pressure from atmospheric pressure to about 80 bar; and

    d) for about 10 minutes to about 600 minutes.

20. The process of embodiment 19, wherein the inert process gas is selected from the group comprising $N_2$, Ar, and mixtures thereof,
optionally wherein the inert process gas consists of $N_2$, Ar, and mixtures thereof.

21. The process of embodiment 19 or embodiment 20, wherein the temperature is between 900 °C to about 1600 °C.

22. The process of any one of embodiments 19-21, wherein the high BET SSA carbonaceous particulate starting material has a BET SSA from about 650 m$^2$/g to 1200 m$^2$/g,
optionally wherein the high BET SSA carbonaceous particulate material has a BET SSA of about 700 m$^2$/g to about 1000 m$^2$/g.

23. The process of any one of embodiments 19-22, wherein the high BET SSA carbonaceous particulate starting material is prepared beforehand, comprising subjecting a low BET SSA carbonaceous particulate material with a BET SSA from about 5 m$^2$/g to about 700 m$^2$/g to:

   a) a reactive process gas capable of oxidizing at least a portion of the carbon components on the outer surface;

   b) at a temperature from about 900 °C to about 2200 °C;

   c) at a pressure from atmospheric pressure to about 80 bar; and

   d) for about 10 minutes to about 600 minutes.

24. The process of embodiment 23, wherein the reactive process gas is selected from the group comprising $CO_2$, steam, and mixtures thereof,
optionally wherein the reactive process gas is selected from the group comprising $CO_2$, steam, and mixtures thereof.

25. The process of embodiment 23 or embodiment 24, wherein the low BET SSA carbonaceous particulate material has a BET SSA from about 20 m$^2$/g to about 600 m$^2$/g,
optionally wherein the low BET SSA carbonaceous particulate material has a BET SSA from about 60 m$^2$/g to about 450 m$^2$/g.

26. The process according to any one of embodiments 23-25, wherein the low BET SSA carbonaceous particulate material comprises an outer surface comprising carbon components; and
wherein the BET SSA of the high BET SSA carbonaceous particulate material is higher than the BET SSA of the low BET SSA carbonaceous particulate material.

27. The process according to any one of embodiments 23-26, wherein the low BET SSA carbonaceous particulate material has a BET SSA from about 40 m$^2$/g to about 500 m$^2$/g and an OAN from about 120 mL/100 g to about 400 mL/100 g.

28. The process according to any one of embodiments 19-27, wherein the high BET SSA carbonaceous particulate material has a BET SSA from about 700 m$^2$/g to about 1200 m$^2$/g and an OAN from about 300 mL/100 g to about 750 mL/100 g.

29. The process according to any one of embodiments 19-28, wherein the carbonaceous particulate starting material is a carbon black, optionally wherein the carbonaceous particulate starting material is selected from the group comprising of thermal black, acetylene black, furnace black, Ketjen black, and mixtures thereof.

### EXAMPLES

### Example 1 - Preparation of Carbonaceous Particulate Materials

A variety of carbonaceous particulate materials according to the present disclosure were prepared by the methods described herein, and compared to a variety of known/commercially available carbon blacks.
Generally, for the synthesis of carbon black material according to the invention, the starting carbon black material is loaded into a fixed fluidized bed or muffle furnace in a batch set-up or fed into a fluidized bed furnace or rotary kiln in a continuous set-ups and subjected to inert gas such as nitrogen or argon. Temperatures between 900 °C and 2200 °C are used. Post-treatment temperatures are held for 10 up to 600 minutes at a pressure of between about atmospheric pressure to about 80 bar. After cooling to room temperature, carbonaceous particulate materials according to the invention are obtained.
The inventive examples IE 1 to IE 5 were prepared using the high BET SSA carbonaceous particulate material CE 3 as starting material. The precise methods of synthesis were as follows:

Material from the example IE 1 was prepared using a high temperature muffle box furnace. Starting material, amount of 142 g, was loaded into $Al_2O_3$ crucibles and placed in the furnace at room temperature. The electrically heated furnace was then heated up to the operating temperature of 1400 °C with dwell time of 360 min. After 360 minutes samples were cooled down to 300 °C in a controlled manner, followed by natural cooling. Treatment was done under nitrogen atmosphere with a constant flow of 14 L/min.

Material from the example IE 2 was prepared using a high temperature muffle box furnace. Starting material, amount of 144 g, was loaded into $Al_2O_3$ crucibles and placed in the furnace at room temperature. The electrically heated furnace was then heated up to the operating temperature of 1400 °C with dwell time of 240 min. After 240 minutes samples were cooled down to 300 °C in a controlled manner, followed by natural cooling. Treatment was done under nitrogen atmosphere with a constant flow of 14 L/min.

Material from the example IE 3 was prepared using a high temperature muffle box furnace. Starting material, amount of 222 g, was loaded into $Al_2O_3$ crucibles and placed in the furnace at room temperature. The electrically heated furnace was then heated up to the operating temperature of 1400 °C with dwell time of 60 min. After 60 minutes samples were cooled down to 300 °C in a controlled manner, followed by natural cooling. Treatment was done under nitrogen atmosphere with a constant flow of 20 L/min.

Material from the example IE 4 was prepared using a high temperature muffle box furnace. Starting material, amount of 107 g, was loaded into $Al_2O_3$ crucibles and placed in the furnace at room temperature. The electrically heated furnace was then heated up to the operating temperature of 1400 °C. Directly after reaching 1400 °C the sample was cooled down to 300°C in a controlled manner, followed by natural cooling. Treatment was done under nitrogen atmosphere with a constant flow of 20 L/min..

Material from the example IE 5 was prepared using a high temperature muffle box furnace. Starting material, amount of 103 g, was loaded into $Al_2O_3$ crucibles and placed in the furnace at room temperature. The electrically heated furnace was then heated up to the operating temperature of 1400 °C. Directly after reaching 1400 °C the sample was cooled down to 300°C in a controlled manner, followed by natural cooling. Treatment was done under nitrogen atmosphere with a constant flow of 20 L/min

The carbonaceous particulate materials according to the present disclosure (named IE 1 to IE 5) were also compared to known and commercially available carbon black materials (named CE 1 to CE 6).

**Table 2a: Physicochemical Properties of the Carbonaceous Particulate Materials prepared in Example 1**

| Graphite | BET SSA [$m^2$/g] | Micropore area [$m^2$/g] | Micropore area [% of BET] | Pore area 5-30 nm [$m^2$/g] | Pore area 5-30 nm [% of BET] | Total pore volume ($cm^3$/g) |
|---|---|---|---|---|---|---|
| IE 1 | 319 | 2 | 0.6 | 110 | 35 | 0.99 |
| IE 2 | 344 | 0 | 0 | 116 | 34 | 1.08 |
| IE 3 | 362 | 0.7 | 0.2 | 113 | 31 | 1.05 |
| IE 4 | 450 | 1.6 | 0.3 | 121 | 27 | 1.09 |
| IE 5 | 464 | 0 | 0 | 130 | 28 | 1.07 |
| CE 1 | 222 | 76 | 35 | 33 | 15 | 0.65 |
| CE 2 | 64 | 5 | 8 | 18 | 28 | 0.25 |
| CE 3 | 780 | 117 | 15 | 125 | 16 | 1.13 |
| CE 4 | 140 | 18 | 13 | 64 | 46 | 0.84 |
| CE 5 | 124 | 0 | 0 | 59 | 48 | 0.68 |
| CE 6 | 384 | 136 | 36 | 32 | 8 | 0.34 |

**Table 2b: Physicochemical Properties of Carbonaceous Particulate Material prepared in Example 1 (cont'd)**

| Graphite | c/2 [nm] | Raman $I_G/I_D$ | OAN [mL/100 g] | Xylene density [g/$cm^3$] | Intra-aggregate pore size [nm] | Total Surface Free Energy [mN/m] |
|---|---|---|---|---|---|---|
| IE 1 | 0.356 | 1.10 | 284 | 1.51 | 34 | |
| IE 2 | 0.3565 | 1.09 | 289 | 1.51 | 36 | 31 |
| IE 3 | 0.359 | 1.09 | 292 | 1.61 | 35 | |

(continued)

| Graphite | c/2 [nm] | Raman $I_G/I_D$ | OAN [mL/100 g] | Xylene density [g/cm$^3$] | Intra-aggregate pore size [nm] | Total Surface Free Energy [mN/m] |
|---|---|---|---|---|---|---|
| IE 4 | 0.360 | | 296 | 1.90 | 36 | |
| IE 5 | 0.361 | | 295 | 1.83 | 36 | |
| CE 1 | 0.362 | 1.10 | 175 | 1.91 | 42 | 23 |
| CE 2 | 0.355 | 1.12 | 190 | 1.89 | 64 | 30 |
| CE 3 | 0.363 | 0.97 | 320 | 1.96 | 29 | 19 |
| CE 4 | 0.349 | 3.06 | 258 | 1.51 | 29 | |
| CE 5 | 0.347 | 3.16 | 238 | 1.49 | 35 | |
| CE 6 | 0.362 | 1.00 | 288 | 1.92 | 52 | |

Fig. 1 further illustrates the pore size distribution of the carbonaceous particulate materials according to the invention to commonly used carbon blacks. Carbonaceous particulate materials according to the invention demonstrate an increased number of pores in the pore size range of 5 nm to 30 nm compared to the comparative examples.

For applications in fuel cells or electrolyzers, the electric resistivity of and the resistance to corrosion are two important parameters influencing quality and lifetime of resulting products. Hence, the carbonaceous particulate materials according to the present disclosure (named IE 1 to IE 5) were also compared to known and commercially available carbon black materials. The results of said measurements are summarized in Table 3. For sake of convenience, the BET SSA values of table 2a are also reproduced below:

**Table 3: Specific resistivity and carbon corrosion after 2 h of Carbonaceous Particulate Material prepared in Example 1**

| Carbonaceous material | BET SSA [m$^2$/g] | Specific resistivity [$\Omega$*cm] @ 0.6 g/cm$^3$ | Carbon corrosion after 2 h [wt%] |
|---|---|---|---|
| IE 1 | 319 | 0.052 | 0.7 |
| IE 2 | 344 | 0.053 | 1.7 |
| IE 3 | 362 | 0.053 | 1.4 |
| IE 4 | 450 | 0.067 | 1.8 |
| IE 5 | 464 | 0.065 | 1.5 |
| CE 1 | 222 | 0.127 | 3.8 |
| CE 2 | 64 | 0.10 | 0.5 |
| CE 3 | 780 | 0.085 | 5.1 |
| CE 4 | 140 | 0.114 | 2.5 |
| CE 5 | 124 | 0.108 | 2.0 |
| CE 6 | 384 | 0.09 | 2.7 |

As can be derived from Table 3 above, carbonaceous particulate materials according to the invention allow for consistent low corrosion within the 300 m$^2$/g to 600 m$^2$/g BET SSA span, likely linked to the low micropore area (<10 m$^2$/g). The only comparative example with comparable corrosion resistance, CE 2, is characterized by a very low BET SSA (64 m$^2$/g), thus not providing sufficient surface area for the catalyst material leading to low ECSA.

As can be derived from Table 3 the resistivity is lower for the inventive examples as compared to the comparative examples. The low resistivity is considered to be linked to the higher structure as measured by OAN. The low resistivity will lead to improved conductivity in the catalyst layer.

Generally, materials with low BET SSA and high degree of graphiticity are expected to be characterized with low corrosion. However, data in Table 3 illustrates the importance of the combination of optimum properties as the inventive materials. CE4 and CE5 have low BET SSA and high degree of graphiticity ($I_G/I_D$) but show high corrosion.

**Example 2** - **Preparation of Catalyst Materials from the Carbonaceous Particulate Materials**

In order to obtain a suitable gas diffusion electrode (GDE) catalyst materials, Pt active catalyst material had to be deposited on the carbonaceous particulate materials according to the invention and on commercially available carbon blacks.

First, a colloidal suspension of Pt nanoparticles was synthesized by mixing an ethylene glycol solution of NaOH (50 mL, 0.4 M) with an ethylene glycol solution of H2PtCl6·6 H2O (50 mL, 1 g) under vigorous stirring resulting in a yellowish platinum hydroxide or oxide colloidal solution. The reaction was performed under an inert atmosphere or Ar. The colloidal solution was then heated to 160 °C while purging Ar gas through the system for 3 h yielding a blackish-brown homogenous metal particle colloidal suspension with Pt concentration of 4 g Pt per liter of ethylene glycol.

In order to support the Pt nanoparticles onto a carbonaceous particulate material, 30 mL of 1 M HCl was added to 7.3 mL the colloidal Pt nanoparticle solution for precipitation. The solution was centrifuged (4000 rpm, 6 min) and the supernatant solvent discarded. This procedure was repeated before re-dispersing the Pt nanoparticles in acetone. Finally, the as-synthesized Pt nanoparticles were deposited onto different carbonaceous particulate materials by mixing the Pt nanoparticles suspension (in acetone) with carbon black (suspended in 3 mL of acetone and sonicated for 1 h). Finally, the catalyst-supported carbonaceous particulate material was dried.

Typically, Pt nanoparticles prepared according to the described method will be characterized by a diameter of about 1 nm to about 6 nm.

Reference: J. Quinson et al, ACS Catal., 2018, 8, 7, 6627-6635, https://doi.org/10.1021/acscatal.8b00694

**Example 3** - **Preparation of a Gas Diffusion Electrode (GDE) containing the Carbonaceous Particulate Materials**

In order to be used as catalyst material in a gas diffusion electrode (GDE), a catalyst-layer must be prepared from the carbonaceous particulate catalyst compositions.

To prepare the catalyst ink, the dried catalyst powder was dispersed in a mixture of Milli-Q water and iso-propanol (mixture volume ratio of 3:1). To disperse the powder, the mixture was sonicated for 5 min at room temperature. Subsequently, Nafion solution was added so that the ink contained a mass C:Nafion ratio of 1. The ink was sonicated again for 5 min. The final inks had a Pt concentration of 0.5 mg/mL for all catalysts.

The catalyst films were produced by vacuum filtration of the catalyst ink onto the GDL. To conduct the vacuum filtration, the ink was first diluted by Milli-Q water to a Pt concentration of 0.05 mg/mL (mixture volume ratio 1:3). The ink was then added to a vacuum apparatus and filtrated through an MPL-coated GDL. From this film-coated GDL (diameter = 4 cm), a disk (diameter = 3 mm) was cut and used as GDE. All investigated GDEs prepared from the commercially available Pt/C catalysts had a Pt loading of 208 $\mu$g(Pt)/cm$^2$ on the GDL.

The GDE consists of a half fuel cell where the air crosses the gas diffusion layer (GDL)/MPL, and arrives at the catalyst layer that is in contact with an electrolyte solution. This system permits studying the active platinum on the surface, the performance and the stability of the catalyst layer, as expressed by parameters like a CO-stripping curve, polarization curve and accelerated stress tests.

Generally, materials according to the invention with an intermediate BET SSA, low microporosity and high amount of pores in the 5-30 nm range are expected to generally be characterized by an ECSA value of above 70 m$^2$/g, and in some cases above 80 m$^2$/g. In contrast, the comparative examples are expected to show lower electrochemical surface areas in the range of 40 to 60 m$^2$/g, with the exception of CE 3. CE 3, with a high BET SSA of 780 m$^2$/g and a subsequent low corrosion stability of 5.1 wt% carbon loss after 2 h under corrosive conditions was characterized by an ECSA of only 63.5 m$^2$/g.

Without wishing to be bound by theory, it is believed that the optimum combination of surface area range (between 300-600 m$^2$/g), pore size distribution and surface properties are the reasons for the low corrosion combined with the expected high ECSA compared with the comparative examples.

**Claims**

1. A carbonaceous particulate material, wherein the carbonaceous particulate material is **characterized by**

   d) a BET SSA from about 300 m$^2$/g to about 600 m$^2$/g;
   e) a micropore area of at most about 10 m$^2$/g; and
   f) a pore area from about 60 m$^2$/g to about 240 m$^2$/g in the 5 nm - 30 nm pore diameter range.

2. The carbonaceous particulate material according to claim 1, wherein the micropore area represents at most about 3% of the BET SSA, optionally wherein the micropore area represents at most about 2.5%, at most about 2%, at most about 1.8%, or at most about 1.5% of the BET SSA.

3. The carbonaceous particulate material according to any one of claims 1-2, wherein the pore area in the 5-30 nm pore range represents from about 20% to about 40% of the BET SSA, optionally wherein the pore area in the 5-30 nm pore range represents from about 25% to about 40%, or from about 20% to about 35%, or from about 25% to about 35% of the BET SSA.

4. The carbonaceous particulate material according to any one of claims 1-3, wherein the carbonaceous particulate material is further **characterized by** a carbon loss of less than 2 wt%, based on the total weight of the carbonaceous particulate material, after being exposed to corrosive conditions for 2 hours, optionally wherein the carbon loss is less than 1.9 wt% or less than 1.85 wt%, based on the total weight of the carbonaceous particulate material, after being exposed to corrosive conditions for 2 hours.

5. The carbonaceous particulate material according to any one of claims 1-4, wherein the carbonaceous particulate material is a carbon black, optionally wherein the carbon black is selected from thermal black, acetylene black, furnace black, and Ketjen black.

6. A catalyst composition, comprising the carbonaceous particulate material of any one of claims 1-5 and at least one transition metal, or alloy, or mixture comprising the at least one transition metal.

7. The catalyst composition according to claim 6, wherein the at least one transition metal, or alloy, or mixture comprising the at least one transition metal is iridium, nickel, cobalt, iron, chromium, palladium, platinum, rhodium, and/or ruthenium,
optionally wherein the at least one transition metal, or alloy, or mixture comprising the at least one transition metal is platinum.

8. The catalyst composition according to any one of claims 6-7, wherein the catalyst composition is further **characterized by** an electrochemical surface area (ECSA) of at least about 70 $m^2/g$, optionally wherein the carbonaceous particulate material has an ECSA of at least about 75 $m^2/g$, or of at least about 80 $m^2/g$.

9. A catalyst layer comprising the carbonaceous particulate material according to any one of claims 1-5, and/or the catalyst composition according to any one of claims 6-8.

10. A fuel cell or electrolyzer, comprising the carbonaceous particulate material according to any one of claims 1-5, the catalyst composition according to any one of claims 6-8, and/or the catalyst layer according to claim 9.

11. A process for producing a carbonaceous particulate material as defined in any one of claims 1-5, comprising subjecting a high BET SSA carbonaceous particulate material with a BET SSA of between about 600 $m^2/g$ and about 1500 $m^2/g$ to:

    e) an inert process gas;
    f) at a temperature from about 900 °C to about 2200 °C;
    g) at a pressure from atmospheric pressure to about 80 bar; and
    h) for about 10 minutes to about 600 minutes.

12. The process of claim 11, wherein the inert process gas is selected from the group comprising $N_2$, Ar, and mixtures thereof,
optionally wherein the inert process gas consists of $N_2$, Ar, and mixtures thereof.

13. The process of any one of claims 11-12, wherein the high BET SSA carbonaceous particulate starting material is prepared beforehand, comprising subjecting a low BET SSA carbonaceous particulate material with a BET SSA from about 5 $m^2/g$ to about 700 $m^2/g$ to:

    e) a reactive process gas capable of oxidizing at least a portion of the carbon components on the outer surface;
    f) at a temperature from about 900 °C to about 2200 °C;
    g) at a pressure from atmospheric pressure to about 80 bar; and

h) for about 10 minutes to about 600 minutes.

14. The process of claim 13, wherein the reactive process gas is selected from the group comprising $CO_2$, steam, and mixtures thereof.

15. The process according to any one of claims 13-14, wherein the low BET SSA carbonaceous particulate material comprises an outer surface comprising carbon components; and wherein the BET SSA of the high BET SSA carbonaceous particulate material is higher than the BET SSA of the low BET SSA carbonaceous particulate material.

Figure 1

Pore Volume (BJH adsorption)

| | Europäisches Patentamt European Patent Office Office européen des brevets | **EUROPEAN SEARCH REPORT** | Application Number **EP 23 30 6433** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2013/045894 A1 (JOHNSON MATTHEY FUEL CELLS LTD [GB]; TIMCAL LTD [CH]) 4 April 2013 (2013-04-04) * claims 1-10 * * example 1 * | 1-15 | INV. H01M4/86 B01J21/18 B01J23/42 B01J23/44 B01J23/46 |
| A | EP 3 147 976 A1 (NIPPON STEEL & SUMITOMO METAL CORP [JP] ET AL.) 29 March 2017 (2017-03-29) * claims 1-9 * * paragraphs [0090] – [0098] * | 1-15 | B01J23/74 B01J23/89 C01B32/318 C01B32/336 H01M4/88 H01M4/92 |
| A | WO 2022/172948 A1 (NE CHEMCAT CORP) 18 August 2022 (2022-08-18) * abstract * | 1-15 | ADD. |
| E | & EP 4 293 758 A1 (N E CHEMCAT CORP [JP]) 20 December 2023 (2023-12-20) * claims 1-9 * | 1-15 | H01M4/90 H01M8/10 |

| TECHNICAL FIELDS SEARCHED (IPC) |
|---|
| H01M B01J C01B |

The present search report has been drawn up for all claims

| Place of search | Date of completion of the search | Examiner |
|---|---|---|
| Munich | 21 February 2024 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6433

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2024

| Patent document cited in search report | Publication date | Patent family member(s) | | Publication date |
|---|---|---|---|---|
| WO 2013045894 A1 | 04-04-2013 | CN | 103930202 A | 16-07-2014 |
| | | EP | 2760580 A1 | 06-08-2014 |
| | | EP | 3467922 A1 | 10-04-2019 |
| | | JP | 6124899 B2 | 10-05-2017 |
| | | JP | 6387431 B2 | 05-09-2018 |
| | | JP | 2014534052 A | 18-12-2014 |
| | | JP | 2017199656 A | 02-11-2017 |
| | | KR | 20140096271 A | 05-08-2014 |
| | | KR | 20190018547 A | 22-02-2019 |
| | | US | 2014295316 A1 | 02-10-2014 |
| | | US | 2017098833 A1 | 06-04-2017 |
| | | WO | 2013045894 A1 | 04-04-2013 |
| | | ZA | 201401949 B | 26-02-2020 |
| EP 3147976 A1 | 29-03-2017 | CA | 2941994 A1 | 24-09-2015 |
| | | CN | 106030877 A | 12-10-2016 |
| | | EP | 3147976 A1 | 29-03-2017 |
| | | JP | 6150936 B2 | 21-06-2017 |
| | | JP | WO2015141810 A1 | 13-04-2017 |
| | | US | 2017194652 A1 | 06-07-2017 |
| | | WO | 2015141810 A1 | 24-09-2015 |
| WO 2022172948 A1 | 18-08-2022 | CA | 3210469 A1 | 18-08-2022 |
| | | CN | 116830323 A | 29-09-2023 |
| | | EP | 4293758 A1 | 20-12-2023 |
| | | JP | WO2022172948 A1 | 18-08-2022 |
| | | KR | 20230145365 A | 17-10-2023 |
| | | WO | 2022172948 A1 | 18-08-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013045894 A
- EP 3552261 A
- US 9017837 B2

### Non-patent literature cited in the description

- **BRUNAUER** ; **EMMET** ; **TELLER**. Adsorption of Gases in Multi-molecular Layers. *J. Am. Chem. Soc.*, 1938, vol. 60, 309-319
- **RAVIKOVITCH, P.** ; **VISHNYAKOV, A.** ; **RUSSO, R.** ; **NEINARK, A.** *Langmuir*, 2000, vol. 16, 2311-2320
- **JAGIELLO, J.** ; **THOMMES, M.** *Carbon*, 2004, vol. 42, 1227-1232
- **BARRETT, E.P.** ; **JOYNER, L.G.** ; **HALENDA, P.P.** *Journal of the American Chemical Society*, 1951, vol. 73, 373-380
- **HARKINS, W.D.** ; **JURA, G.** *J. Chem. Phys.*, 1943, vol. 11, 430
- **KLUG** ; **ALEXANDER**. x-ray diffraction Procedures. John Wiley & Sons Inc., 1967
- **M. CARMO et al.** *Journal of Power Sources*, 2007, vol. 173, 860-866
- **PROBST**. *Carbon*, 2002, vol. 40, 201-205
- **GRIVEI, KGK**. *Kautschuk Gummi Kunststoffe*, 2003, vol. 56 (9)
- **SPAHR**. *Journal of Power Sources*, 2011, vol. 196, 3404-3413
- **S.C. BALL et al.** *Journal of Power Sources*, 2007, vol. 171 (1), 18-25
- **J. QUINSON et al.** *ACS Catal.*, 2018, vol. 8 (7), 6627-6635, https://doi.org/10.1021/acscatal.8b00694